(19) Europäisches Patentamt
European Patent Office
Office européen des brevets

(11) **EP 4 414 750 A1**

(12) **EUROPEAN PATENT APPLICATION**

(43) Date of publication:
**14.08.2024 Bulletin 2024/33**

(21) Application number: **23192674.2**

(22) Date of filing: **22.08.2023**

(51) International Patent Classification (IPC):
**G01T 1/11** *(2006.01)*    **G01T 3/00** *(2006.01)*

(52) Cooperative Patent Classification (CPC):
**G01T 3/00; G01T 1/11**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2023 TW 112104741**

(71) Applicant: **Heron Neutron Medical Corp.
Zhubei City, Hsinchu County (TW)**

(72) Inventors:
• **TSAI, Wen-Chyi**
 **Hsinchu County (TW)**
• **LIN, Tzung-Yi**
 **Hsinchu County (TW)**

(74) Representative: **Patentship
Patentanwaltsgesellschaft mbH
Paul-Gerhardt-Allee 50
81245 München (DE)**

(54) **NEUTRON MEASURING SYSTEM AND NEUTRON MEASURING METHOD**

(57)     A neutron measuring method is provided. The method includes

utilizing a thermoluminescent crystal (102) in a thermoluminescent dosimeter (101) to emit thermoluminescence or scintillation light, wherein the thermoluminescence is emitted when the thermoluminescent crystal (102) absorbs and stores ionizing radiation emitted by a metallic body (110) that has been activated and subsequently releases the stored ionizing radiation in the form of the thermoluminescence when heated, and wherein the scintillation light is emitted when the thermoluminescent crystal (102) converts the ionizing radiation emitted by the metallic body (110) that has been activated into the scintillation light;

using a photodetector (103) to measure intensity of the thermoluminescence or the scintillation light; and calculating neutron intensity at which the metallic body (110) is located based on the measured intensity of the thermoluminescence or the scintillation light.

FIG. 1A

100B

FIG. 1B

**Description**

**BACKGROUND OF THE INVENTION**

**Field of the Invention**

The present disclosure relates in general to neutron measuring technologies, and it relates particularly to a neutron measuring method.

**Description of the Related Art**

The measurement of neutron intensity utilizes the principle that the metallic body in the radiation field is activated into an unstable radioactive isotope, thereby adopting a High Purity Germanium (HPGe) detector to measure the ionizing radiation emitted by such unstable radioactive isotopes during the decay process and performing gamma spectroscopy analysis. However, the price of HPGe equipment is high, and liquid nitrogen used for maintaining a constantly low temperature state in the HPGe detector is needed, and it takes a long time (about 30 minutes) collecting signals to reduce the error.

In view of the above problems, there is a need for a neutron measuring system and a neutron measuring method, which can measure the neutron intensity with lower cost and higher efficiency.

**BRIEF SUMMARY OF THE INVENTION**

Embodiments of the present disclosure provides a neutron measuring system. The neutron measuring system includes a thermoluminescent dosimeter (TLD), a photodetector, and a computing device. The thermoluminescent dosimeter includes a thermoluminescent crystal emitting thermoluminescence or scintillation light. The thermoluminescence is emitted when the thermoluminescent crystal absorbs and stores ionizing radiation emitted by a metallic body that has been activated and subsequently releases the stored ionizing radiation in the form of the thermoluminescence when heated. The scintillation light is emitted when the thermoluminescent crystal converts the ionizing radiation emitted by the metallic body that has been activated into the scintillation light. The photodetector is for measuring intensity of the thermoluminescence or the scintillation light. The computing device is connected to the photodetector, and is configured to calculate neutron intensity at which the metallic body is located based on the measured intensity of the thermoluminescence or the scintillation light.

In an embodiment, the computing device is further configured to receive the measured intensity of the thermoluminescence from the photodetector, to calculate a thermoluminescent dose of ionizing radiation absorbed and stored by the thermoluminescent crystal based on the intensity of the thermoluminescence and a thermoluminescence-dose calibration factor, to use a first conversion formula to calculate activity of the metallic body based on the thermoluminescent dose and a first conversion factor, and to use a second conversion formula to calculate the neutron intensity at which the metallic body is located based on the calculated activity of the metallic body.

In an embodiment, the computing device is further configured to receive the measured intensity of the scintillation light from the photodetector, to calculate activity of the metallic body based on the intensity of the scintillation light and a second conversion factor, and to use a second conversion formula to calculate the neutron intensity at which the metallic body is located based on the calculated activity of the metallic body.

In an embodiment, the metallic body is activated by irradiating the metallic body with a neutron beam emitted by an irradiation device.

In an embodiment, the thermoluminescent dosimeter is adjacent to the metallic body. In another embodiment, the thermoluminescent dosimeter further includes the metallic body.

In an embodiment, the first conversion formula

is $A = \dfrac{\lambda \times D_{TL}}{E_d \times [1 - e^{-\lambda \times T}]}$, in which $A$ represents the activity of the metallic body, $D_{TL}$ represents the thermoluminescent dose, $\dfrac{\lambda}{E_d \times [1 - e^{-\lambda \times T}]}$ is the first conversion factor, $\lambda$ represents the decay constant of the metallic body, $E_d$ represents unit dose, and $T$ represents the decay dose measuring time.

In an embodiment, the second conversion factor is calculated by using a gamma spectroscopy analyzer to perform a gamma spectroscopy analysis on a sample.

Embodiments of the present disclosure further provides a neutron measuring method. The method includes utilizing a thermoluminescent crystal in a thermoluminescent dosimeter to emit thermoluminescence or scintillation light. The thermoluminescence is emitted when the thermoluminescent crystal absorbs and stores ionizing radiation emitted by a metallic body that has been activated and subsequently releases the stored ionizing radiation in the form of the thermoluminescence when heated. The scintillation light is emitted when the thermoluminescent crystal converts the ionizing radiation emitted by the metallic body that has been activated into the scintillation light. The method further includes using a photodetector to measure intensity of the thermoluminescence or the scintillation light, and calculating neutron intensity at which the metallic body is located based on the measured intensity of the thermoluminescence or the scintillation light.

In and embodiment, the method further includes receiving the measured intensity of the thermoluminescence from the photodetector, calculating a thermoluminescent dose of ionizing radiation absorbed and stored by the thermoluminescent crystal based on the intensity of the thermoluminescence and a thermoluminescence-dose calibration factor, using a first conversion formula to calculate activity of the metallic body based on the thermoluminescent dose and a first conversion factor, and using a second conversion formula to calculate the neutron intensity at which the metallic body is located based on the calculated activity of the metallic body.

In an embodiment, the method further includes receiving the measured intensity of the scintillation light from the photodetector, calculating activity of the metallic body based on the intensity of the scintillation light and a second conversion factor, and using a second conversion formula to calculate the neutron intensity at which the metallic body is located based on the calculated activity of the metallic body.

In an embodiment, the method further includes locating the metallic body adjacent to the thermoluminescent dosimeter. In another embodiment, the activated metallic body is contained in the thermoluminescent dosimeter.

In an embodiment, the method further includes activating the metallic body by irradiating the metallic body with a neutron beam emitted by an irradiation device.

In an embodiment, the method further includes calculating the second conversion factor by using a gamma spectroscopy analyzer to perform a gamma spectroscopy analysis on a sample.

The neutron measuring system and neutron measuring method provided in the present disclosure can quickly (about 5 minutes) and easily obtain reliable measurement results of metallic body activity. In the context of boron neutron capture therapy (BNCT), by simultaneously setting multiple thermoluminescent dosimeters in the measurement phantom (i.e., an object that replaces the human body), the characteristic analysis, quality assurance and quality control of neutron beams can be quickly completed.

**BRIEF DESCRIPTION OF THE DRAWINGS**

The present disclosure can be more fully understood by reading the subsequent detailed description and examples with references made to the accompanying drawings. Additionally, it should be appreciated that in the flow diagram of the present disclosure, the order of execution for each blocks can be changed, and/or some of the blocks can be changed, eliminated, or combined.

FIG. 1A is a system architecture diagram illustrating a neutron measuring system, according to an embodiment of the present disclosure.

FIG. 1B is a system architecture diagram illustrating a neutron measuring system, according to another embodiment of the present disclosure.

FIG. 2 is a flow diagram illustrating a neutron measuring method, according to an embodiment of the present disclosure.

FIG. 3 is a flow diagram illustrating a neutron measuring method, according to another embodiment of the present disclosure.

**DETAILED DESCRIPTION OF THE INVENTION**

The following description is made for the purpose of illustrating the general principles of the invention and should not be taken in a limiting sense. The scope of the invention is best determined by reference to the appended claims.

In each of the following embodiments, the same reference numbers represent identical or similar elements or components.

Ordinal terms used in the claims, such as "first," "second," "third," etc., are only for convenience of explanation, and do not imply any precedence relation between one another.

In the present disclosure, descriptions of method embodiments are also applicable to device or system embodiments, and vice versa.

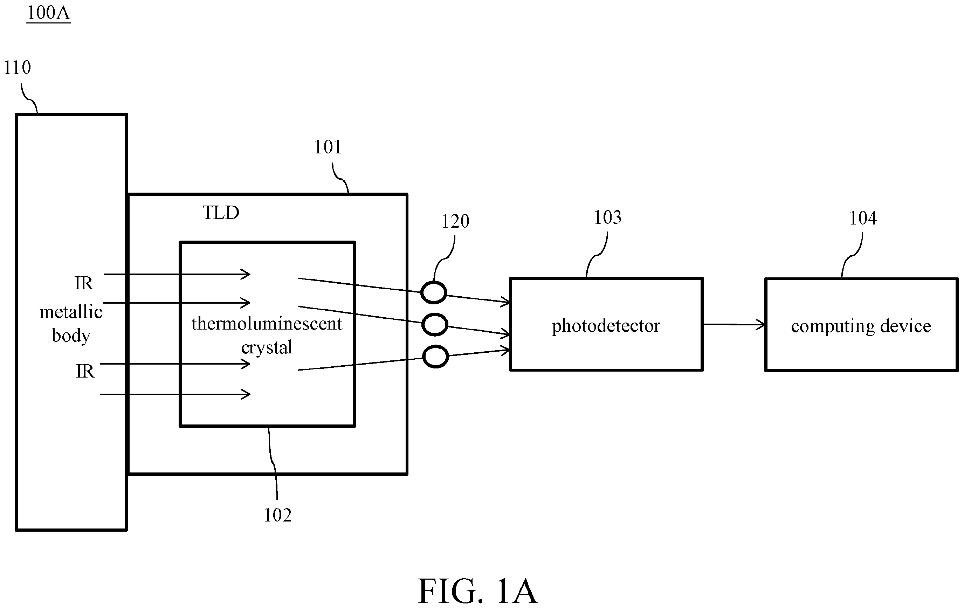

FIG. 1A is a system architecture diagram of a neutron measuring system 100A, according to an embodiment of the present disclosure. As shown in FIG. 1A, the neutron measuring system 100A may include a thermoluminescent dosimeter (TLD) 101, a photodetector 103 and a computing device 104. The thermoluminescent dosimeter 101 contains a thermoluminescent crystal 102. Although the thermoluminescent crystal 102 is drawn as a rectangle in the middle of the thermoluminescent dosimeter 101 in FIG. 1A, the shape or position of the thermoluminescent crystal 102 is not limited by the present disclosure. In this embodiment, the metallic body 110 is located adjacent to the thermoluminescent dosimeter 101 so that the thermoluminescent dosimeter 101 can better absorb the ionizing radiation emitted by the metallic body 110 that has been activated.

The thermoluminescent dosimeter 101 is a radiation dosimeter, which has a thermoluminescent crystal 102 and trace metals. When trace metals (e.g., magnesium (Mg), titanium (Ti), manganese (Mn), dysprosium (Dy)... and other metal elements) are exposed to radiation (e.g., placed in a radiation field, or irradiated by an irradiation device), the thermoluminescent crystal 102 absorbs the ionizing radiation energy and stores the ionizing radiation energy in the crystal lattice. When heated, the thermoluminescent crystal 102 releases the stored energy in the form of thermoluminescence. The intensity of thermoluminescence increases with the intensity of the ionizing radiation to which the thermoluminescent crystal 102 is exposed. The present disclosure estimates the intensity of ionizing radiation, namely the thermoluminescent dose, by detecting the intensity of thermoluminescence. Then, through the thermoluminescent dose, the neutron intensity can be further estimated.

The thermoluminescent dosimeter 101 can be, for example, a thermoluminescent dosimeter product produced by Thermo Fisher Scientific Inc., but the present disclosure is not limited thereto. The material of the thermoluminescent crystal 102 in the thermoluminescent dosimeter 101 can be, for example, lithium fluoride (LiF), calcium fluoride (CaF2), or lithium tetraborate (Li2B4O7), but the present disclosure is not limited thereto. In addition, the specific shape, distribution or position of the thermoluminescent crystals 102 in the thermoluminescent dosimeter 101 are not limited by the present disclosure.

In an embodiment, the characteristics of the thermoluminescent crystal 102 itself being a scintillator is utilized to measure the intensity of scintillation light emitted instantaneously by the thermoluminescent crystal 102 absorbing ionizing radiation. Utilizing the characteristic that the intensity of the scintillation light is approximately linear with the metal activity in a certain range, the metal activity can be deduced from the intensity of the scintillation light, and then the neutron intensity can be deduced from the metal activity. During the above process, the thermoluminescent crystal 102 does not need to be heated.

In an embodiment, considering that the metal contained in the thermoluminescent dosimeter 101 itself may not meet the requirements for neutron measurement, the metallic body 110 used in the neutron measuring system 100A may be a metallic body external to the thermoluminescent dosimeter. The metallic body 110 can be, for example, a metal foil containing metal elements such as magnesium (Mg), titanium (Ti), manganese (Mn), dysprosium (Dy), etc., which will be activated into unstable radioactive isotopes in the radiation field and release ionizing radiation IR during its decay process. Ionizing radiation IR may include but not limited to Gamma radiation and Beta radiation.

The thermoluminescence or scintillation light emitted by the thermoluminescent crystal 102 is represented by photon 120 in the figures. The photodetector 103 can convert the photon signal into an electronic signal for measuring the intensity of thermoluminescence or scintillation light. The photodetector 103 can be, for example, a photomultiplier, a photoresistor, or a photodiode, but the present disclosure is not limited thereto. In an embodiment, the photodetector 103 is a photomultiplier tube, which may include a photocathode, multiple dynodes and an anode (not shown in the figures). When the photon 120 released by the thermoluminescent crystal 102 hits the photocathode, a photoelectric effect will occur to generate electrons, and the generated electrons will be focused to the dynodes to generate multiple secondary electrons. Thus, the number of electrons is multiplied through a series of dynodes, and the electrons finally reaches the anode to generate an electronic signal that can represent the intensity of thermoluminescence or scintillation light. The photodetector 103 may further include a communication interface (although not shown in the figures) to transmit an electronic signal representing the intensity of the thermoluminescence or scintillation light to the computing device 104. The communication interface can be, for example, RS-232, USB or a digital I/O interface card, but the present disclosure is not limited thereto.

The computing device 104 can be a computer system, such as a personal computer (e.g., a desktop computer or a notebook computer) or a server computer running an operating system (e.g., Windows, Mac OS, Linux, UNIX, etc.), or it can be a mobile device with the ability to execute instructions and calculate, such as smartphones and tablet computers. The computing device 104 includes a processing device. The processing device may be any device for executing instructions, such as a central processing unit (CPU), a microprocessor, a controller, a microcontroller, or a state machine. The computing device 104 can further include a storage device. The storage device may be any device containing non-volatile memory (e.g., read only memory, electronically erasable programmable read-only memory (EEPROM), flash memory, non-volatile random access memory (NVRAM)), such as hard disk (HDD), solid state drive (SSD) or optical disc. The storage device stores the programs or instructions required by the embodiments of the present disclosure, for the processing device to load to perform corresponding operations. In the embodiments of the present disclosure, the computing device 104 is used for calculating the activity of the metallic body 110 based on the intensity of the scintillation light, as well as the neutron intensity at which the metallic body is located.

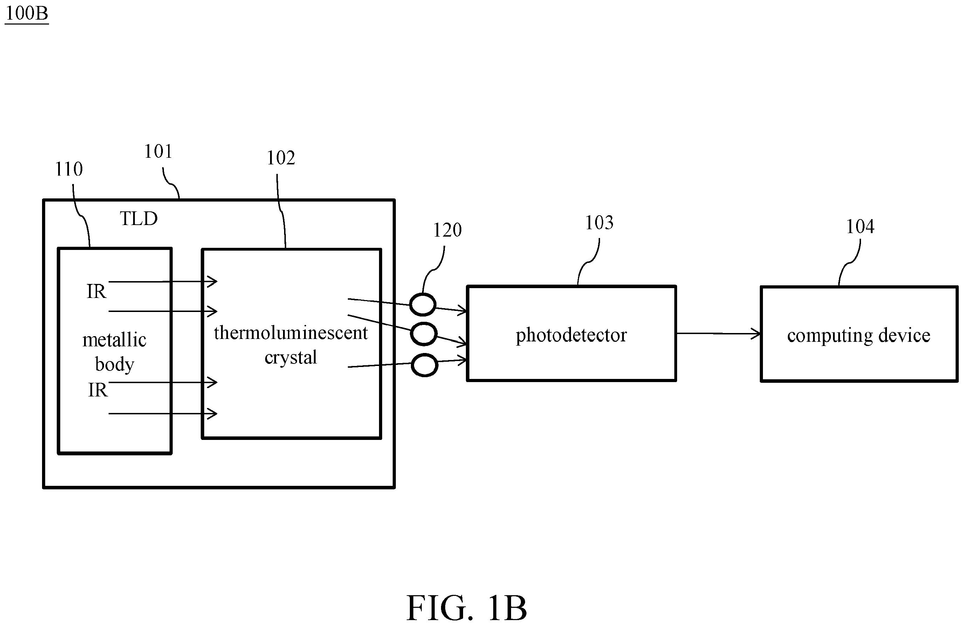

FIG. 1B is a system architecture diagram illustrating a neutron measuring system 100B, according to another embodiment of the present disclosure. As shown in FIG. 1B, the difference between the neutron measuring system 100B and the neutron measuring system 100A is that the thermoluminescent dosimeter 101 in the neutron measuring system 100B further includes the metallic body 110. In other words, the metallic body 110 used in the neutron measuring system 100B is the metal contained in the thermoluminescent dosimeter 101. Except for that, the functions and working principles of the components in the neutron measuring system 100B are the same as those described in the neutron measuring system 100A, and will not be repeated here.

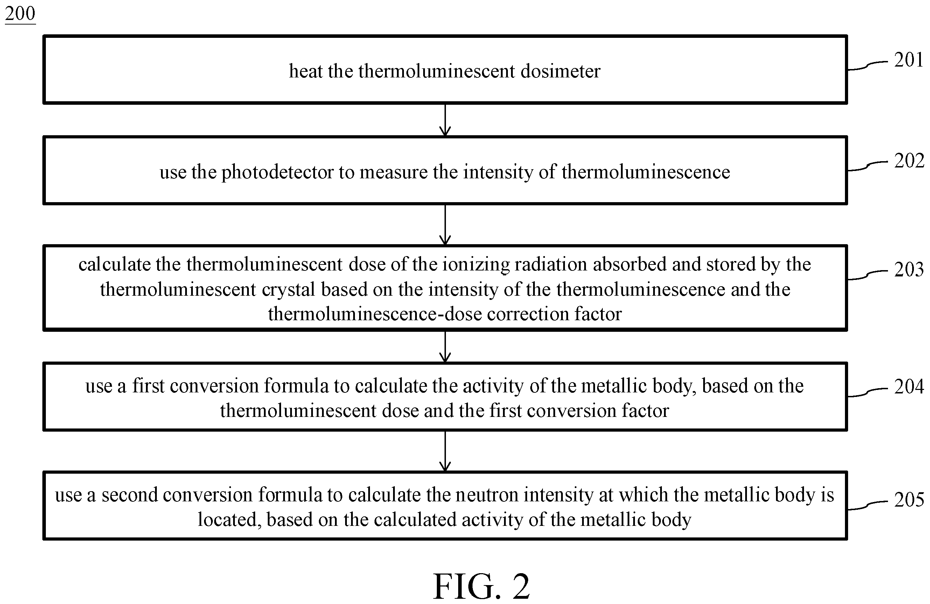

FIG. 2 is a flow diagram illustrating a neutron measuring method 200, according to an embodiment of the present disclosure. As shown in FIG. 2, the neutron measuring method 200 may include steps 201-205. In the neutron measuring method 200, steps 203-205 can be executed by the computing device 104.

In step 201, the thermoluminescent dosimeter 101 is heated. Then, the neutron measuring method 200 proceeds to step 202. As described above, the thermoluminescent crystal 102 in the thermoluminescent dosimeter 101 absorbs and stores the ionizing radiation IR emitted by the activated metallic body 110. When heated, the thermoluminescent crystal 102 releases the stored ionizing radiation IR in the form of thermoluminescence.

In step 202, the photodetector 103 is used to measure the intensity of thermoluminescence. Then, the neutron measuring method 200 proceeds to step 203.

In step 203, the thermoluminescent dose of the ionizing radiation IR absorbed and stored by the thermoluminescent crystal 102 is calculated based on the intensity of the thermoluminescence and the thermoluminescence-dose calibration factor. Then, the neutron measuring method 200 proceeds to step 204.

In step 204, a first conversion formula is used to calculate the activity of the metallic body 110, based on the thermoluminescent dose and the first conversion factor. Then, the neutron measuring method 200 proceeds to step 205.

In step 205, a second conversion formula is used to calculate the neutron intensity at which the metallic body 110 is located, based on the calculated activity of the metallic body 110.

In an embodiment, the neutron measuring method 200 may further include a step of locating the metallic body 110 adjacent to the thermoluminescent dosimeter 101, such as the configuration of the neutron measuring system 100A in FIG. 1A.

In another embodiment, the metallic body 110 irradiated in step 201 is contained in the thermoluminescent dosimeter 101, such as the configuration of the neutron measurement system 100B in FIG. 1B.

In an embodiment, before the step 201, the neutron measuring method 200 may further include a step of irradiating the metallic body 110 at the irradiation position with a neutron beam emitted by the irradiation device to activate the metallic body 110. The irradiation device can be any neutron emitter, which can be used to emit neutrons to irradiate the patient's tumor site. For example, the emitted neutrons will react with drugs (e.g., boron-10) at the irradiated tumor site, and high-energy particles (e.g., lithium-7 or alpha particles) will be generated to destroy cancer cells.

In an embodiment, the thermoluminescence-dose calibration factor used in step 203 represents the relationship between the intensity of the thermoluminescence and the thermoluminescent dose. The thermoluminescent dose is usually proportional to the intensity of the thermoluminescence, so the thermoluminescence-dose calibration factor can be equivalent to the ratio that needs to be multiplied to convert the measured intensity of the thermoluminescence into the thermoluminescent dose, and the ratio can be derived from experimental results.

In an embodiment, the first conversion factor used in step 204 may calculated by using a gamma spectroscopy analyzer such as a High Purity Germanium (HPGe) in advance to perform a gamma spectroscopy analysis on the sample. For example, the HPGe can be used in advance to analyze the gamma spectrum released by the sample (which has approximately the same composition and activity as the metallic body 110) that has been activated, in order to obtain the activity of the sample. At the same time, the thermoluminescent crystal is also used to absorb the ionizing radiation, and then the photodetector is used to measure the intensity of the thermoluminescence emitted by the thermoluminescent crystal, and the intensity of the thermoluminescence is converted into a thermoluminescent dose based on the thermoluminescence-dose calibration factor. As such, a pair of corresponding metallic body activity (i.e., the activity of the metallic body) and thermoluminescent dose can be obtained. Multiple pairs of corresponding metallic body activity and thermoluminescent dose can be obtained by repeatedly executing the above operations. Regression, interpolation, or other similar approaches can then be used to estimate the relationship between the thermoluminescent dose and the metallic body activity, namely the first conversion factor.

In an embodiment, the first conversion formula used in step 204 is as follows:

$$A = \frac{\lambda \times D_{TL}}{E_d \times [1 - e^{-\lambda \times T}]}$$

In the first conversion formula, $A$ represents the activity of the metallic body, $D_{TL}$ represents the thermoluminescent dose, $\frac{\lambda}{E_d \times [1 - e^{-\lambda \times T}]}$ is the first conversion factor, $\lambda$ represents the decay constant of the metallic body, $E_d$ represents unit dose, $T$ represents the decay dose measuring time.

In an embodiment, the second conversion formula used in step 205 is as follows:

$$\int \phi(E)\sigma(E)dE = \frac{A}{N \times (1 - e^{-\lambda t})}$$

In the second conversion formula, $A$ represents the activity of the metallic body, $\lambda$ represents the decay constant of the metallic body, $t$ represents the exposure time, $N$ represents the atomic density of the material at the measurement position, $E$ represents the neutron energy, and $\Phi(E)$ represents the neutron flux (i.e., the neutron intensity) when the neutron energy at the measurement position is $E$, $\sigma(E)$ is the reaction cross section of material when the neutron energy is $E$.

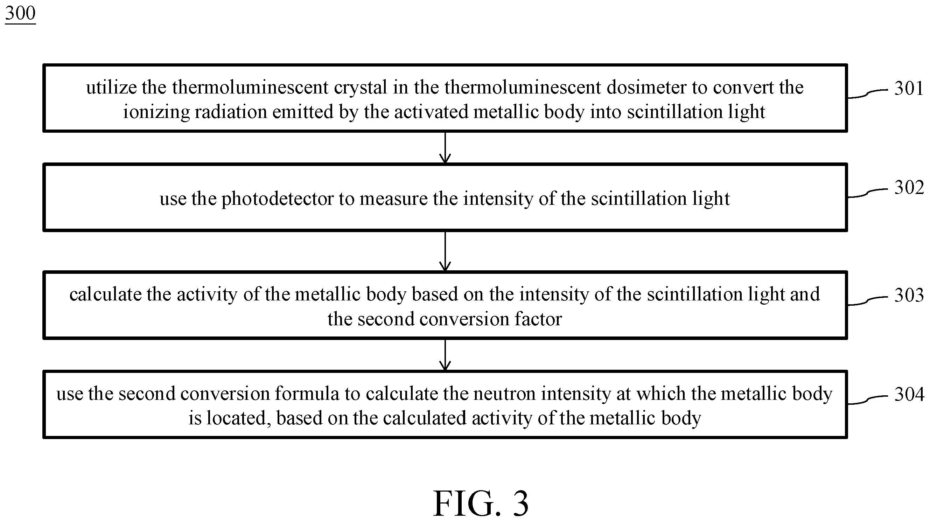

FIG. 3 is a flow diagram illustrating a neutron measuring method 300, according to another embodiment of the present disclosure. As shown in FIG. 3, the neutron measuring method 300 may include steps 301-304. In the neutron measuring method, step 303 and step 304 can be executed by the computing device 104.

In step 301, the thermoluminescent crystal 102 in the thermoluminescent dosimeter 101 is utilized to convert the ionizing radiation emitted by the activated metallic body 110 into scintillation light. Then, the neutron measuring method 300 proceeds to step 302.

In step 302, the photodetector 103 is used to measure the intensity of the scintillation light. Then, the neutron measuring method 300 proceeds to step 303.

In step 303, the activity of the metallic body 110 is calculated based on the intensity of the scintillation light and the second conversion factor. Then, the neutron measuring method 300 proceeds to step 304.

In step 304, the second conversion formula is used to calculate the neutron intensity at which the metallic body 110 is located, based on the calculated activity of the metallic body 110.

In an embodiment, the neutron measuring method 300 may further include a step of locating a metallic body 110 adjacent to the thermoluminescent dosimeter 101, such as the configuration of the neutron measuring system 100A in FIG. 1A.

In another embodiment, the metallic body 110 irradiated in step 301 is contained in the thermoluminescent dosimeter 101, such as the configuration of the neutron measuring system 100B in FIG. 1B.

In an embodiment, before the step 301, the neutron measuring method 300 may further include a step of activating the metallic body by irradiating the metallic body at the irradiation position with a neutron beam emitted by the irradiation device.

In an embodiment, the second conversion factor used in step 303 represents the relationship between the intensity of the scintillation light and the activity of the metallic body. For example, the second conversion factor may be equivalent to a ratio that needs to be multiplied to convert the measured intensity of the scintillation light into the activity of the metallic body. In a further embodiment, the second conversion factor can be calculated in advance by using a gamma spectroscopy analyzer such as a HPGe to perform a gamma spectroscopy analysis on a sample. For example, a gamma spectroscopy analyzer such as a HPGe can be used in advance to analyze the gamma spectrum released by the sample (which has approximately the same composition and activity as the metallic body 110) that has been activated, in order to obtain the activity of the sample. At the same time, the thermoluminescent crystal is also used to absorb the ionizing radiation, and then the photodetector is used to measure the intensity of the scintillation light emitted by the thermoluminescent crystal. As such, a pair of corresponding metallic body activity (i.e., the activity of the metallic body) and scintillation light intensity (i.e., the intensity of the scintillation light) can be obtained. Multiple pairs of corresponding metallic body activity and scintillation light intensity can be obtained by repeatedly executing the above operations. Regression, interpolation, or other similar approaches can then be used to estimate the relationship between the scintillation light intensity and the metallic body activity, namely the second conversion factor.

In an embodiment, the second conversion formula used in step 304 is the same as the second conversion formula used in step 205, namely

$$\int \phi(E)\sigma(E)dE = \frac{A}{N \times (1 - e^{-\lambda t})}$$

In the second conversion formula, A represents the activity of the metallic body, $\lambda$ represents the decay constant of the metallic body, $t$ represents the exposure time, $N$ represents the atomic density of the material at the measurement position, $E$ represents the neutron energy, and $\Phi(E)$ represents the neutron flux (i.e., the neutron intensity) when the neutron energy at the measurement position is $E$, $\sigma(E)$ is the reaction cross section of material when the neutron energy is $E$.

The neutron measuring system and neutron measuring method provided in the present disclosure can quickly (about 5 minutes) and easily obtain reliable measurement results of metallic body activity. In the context of boron neutron capture therapy (BNCT), by simultaneously setting multiple thermoluminescent dosimeters in the measurement phantom (i.e., an object that replaces the human body), the characteristic analysis, quality assurance and quality control of neutron beams can be quickly completed.

The above paragraphs are described with multiple aspects. Obviously, the teachings of the specification may be performed in multiple ways. Any specific structure or function disclosed in examples is only a representative situation. According to the teachings of the specification, it should be noted by those skilled in the art that any aspect disclosed may be performed individually, or that more than two aspects could be combined and performed.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A neutron measuring system, comprising:

a thermoluminescent dosimeter (101), comprising a thermoluminescent crystal (102) emitting thermoluminescence or scintillation light, wherein the thermoluminescence is emitted when the thermoluminescent crystal (102) absorbs and stores ionizing radiation emitted by a metallic body (110) that has been activated and subsequently releases the stored ionizing radiation in the form of the thermoluminescence when heated, and wherein the scintillation light is emitted when the thermoluminescent crystal (102) converts the ionizing radiation emitted by the metallic body (110) that has been activated into the scintillation light;
a photodetector (103), for measuring intensity of the thermoluminescence or the scintillation light; and
a computing device (104), connected to the photodetector (103), configured to calculate neutron intensity at which the metallic body (110) is located based on the measured intensity of the thermoluminescence or the scintillation light.

2. The neuron measuring system as claimed in claim 1, wherein the computing device (104) is further configured to receive the measured intensity of the thermoluminescence from the photodetector (103), to calculate a thermoluminescent dose of ionizing radiation absorbed and stored by the thermoluminescent crystal (102) based on the intensity of the thermoluminescence and a thermoluminescence-dose calibration factor, to use a first conversion formula to calculate activity of the metallic body (110) based on the thermoluminescent dose and a first conversion factor, and to use a second conversion formula to calculate the neutron intensity at which the metallic body (110) is located based on the calculated activity of the metallic body (110).

3. The neuron measuring system as claimed in claim 1, wherein the computing device (104) is further configured to receive the measured intensity of the scintillation light from the photodetector (103), to calculate activity of the metallic body (110) based on the intensity of the scintillation light and a second conversion factor, and to use a second conversion formula to calculate the neutron intensity at which the metallic body (110) is located based on the calculated activity of the metallic body (110).

4. The neutron measuring system as claimed in any of claims 1 to 3, wherein the metallic body (110) is activated by irradiating the metallic body (110) with a neutron beam emitted by an irradiation device.

5. The neutron measuring system as claimed in any of claims 1 to 4, wherein the thermoluminescent dosimeter (101) is adjacent to the metallic body (110).

6. The neutron measuring system as claimed in any of claims 1 to 4, wherein the thermoluminescent dosimeter (101) further comprises the metallic body (110).

7. The neutron measuring system as claimed in claim 2, wherein the first conversion formula is as follows:

$$A = \frac{\lambda \times D_{TL}}{E_d \times [1 - e^{-\lambda \times T}]}$$

wherein $A$ represents the activity of the metallic body (110), $D_{TL}$ represents the thermoluminescent dose, $\dfrac{\lambda}{E_d \times [1 - e^{-\lambda \times T}]}$ is the first conversion factor, $\lambda$ represents decay constant of the metallic body (110), $E_d$ represents unit dose, $T$ represents the decay dose measuring time.

8. The neutron measuring system as claimed in claim 3, wherein the second conversion factor is calculated by using a gamma spectroscopy analyzer to perform a gamma spectroscopy analysis on a sample.

9. A neutron measuring method, comprising:

utilizing a thermoluminescent crystal (102) in a thermoluminescent dosimeter (101) to emit thermoluminescence or scintillation light, wherein the thermoluminescence is emitted when the thermoluminescent crystal (102) absorbs and stores ionizing radiation emitted by a metallic body (110) that has been activated and subsequently releases the stored ionizing radiation in the form of the thermoluminescence when heated, and wherein the scintillation light is emitted when the thermoluminescent crystal (102) converts the ionizing radiation emitted by the metallic body (110) that has been activated into the scintillation light;
using a photodetector (103) to measure intensity of the thermoluminescence or the scintillation light;
calculating neutron intensity at which the metallic body (110) is located based on the measured intensity of the thermoluminescence or the scintillation light.

10. The neutron measuring method as claimed in claim 9, further comprising:

receiving the measured intensity of the thermoluminescence from the photodetector (103);
calculating a thermoluminescent dose of ionizing radiation absorbed and stored by the thermoluminescent crystal (102) based on the intensity of the thermoluminescence and a thermoluminescence-dose calibration factor;
using a first conversion formula to calculate activity of the metallic body (110) based on the thermoluminescent dose and a first conversion factor; and

using a second conversion formula to calculate the neutron intensity at which the metallic body (110) is located based on the calculated activity of the metallic body (110).

11. The neutron measuring method as claimed in claim 9, further comprising:

     receiving the measured intensity of the scintillation light from the photodetector (103);
     calculating activity of the metallic body (110) based on the intensity of the scintillation light and a second conversion factor; and
     using a second conversion formula to calculate the neutron intensity at which the metallic body (110) is located based on the calculated activity of the metallic body (110).

12. The neutron measuring method as claimed in any of claims 9 to 11, further comprising:
    activating the metallic body (110) by irradiating the metallic body (110) with a neutron beam emitted by an irradiation device.

13. The neutron measuring method as claimed in claim 9, further comprising:
    locating the metallic body (110) adjacent to the thermoluminescent dosimeter (101).

14. The neutron measuring method as claimed in claim 10, wherein the first conversion formula is as follows:

$$A = \frac{\lambda \times D_{TL}}{E_d \times [1 - e^{-\lambda \times T}]}$$

wherein $A$ represents the activity of the metallic body (110), $D_{TL}$ represents the thermoluminescent dose,

$\dfrac{\lambda}{E_d \times [1 - e^{-\lambda \times T}]}$ is the first conversion factor, $\lambda$ represents decay constant of the metallic body (110), $E_d$ represents unit dose, $T$ represents the decay dose measuring time.

15. The neutron measuring method as claimed in claim 11, further comprising:
    calculating the second conversion factor by using a gamma spectroscopy analyzer to perform a gamma spectroscopy analysis on a sample.

100A

110

101

TLD

IR

metallic
body

IR

thermoluminescent
crystal

120

102

103

photodetector

104

computing device

EP 4 414 750 A1

FIG. 1A

FIG. 1B

200

FIG. 2

300

| | |
|---|---|
| utilize the thermoluminescent crystal in the thermoluminescent dosimeter to convert the ionizing radiation emitted by the activated metallic body into scintillation light | — 301 |
| use the photodetector to measure the intensity of the scintillation light | — 302 |
| calculate the activity of the metallic body based on the intensity of the scintillation light and the second conversion factor | — 303 |
| use the second conversion formula to calculate the neutron intensity at which the metallic body is located, based on the calculated activity of the metallic body | — 304 |

FIG. 3

EP 4 414 750 A1

Europäisches
Patentamt

European
Patent Office

Office européen
des brevets

# EUROPEAN SEARCH REPORT

Application Number

EP 23 19 2674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHINSHO KIYOMITSU ET AL: "Measurements of [gamma]-rays and neutrons in BNCT irradiation field using thermoluminescent phosphor", JAPANESE JOURNAL OF APPLIED PHYSICS, vol. 62, no. 1, 21 November 2022 (2022-11-21), page 010502, XP093126599, JP ISSN: 0021-4922, DOI: 10.35848/1347-4065/ac971e Retrieved from the Internet: URL:https://iopscience.iop.org/article/10.35848/1347-4065/ac971e/pdf> | 1,4-6,9, 12,13 | INV. G01T1/11 G01T3/00 |
| Y | * abstract * * figures 2-5 * * section 2. Thermal neutron fluence measurements using TL phosphor Cr doped Al2O3 and Cd converter * | 1-3, 7-11,14, 15 | |
| X | JP 2021 038983 A (TOKYO METROPOLITAN PUBLIC UNIVERSITY CORPORATION; UNIV KYOTO ET AL.) 11 March 2021 (2021-03-11) | 1,4-6,9, 12,13 | TECHNICAL FIELDS SEARCHED (IPC) |
| Y | * abstract * * figures 1-4 * * paragraphs [0019] - [0021], [0023], [0024], [0028], [0031] - [0037] * | 1-3, 7-11,14, 15 | G01T |
| X | US 2013/068958 A1 (MUKHERJEE BHASKAR [DE] ET AL) 21 March 2013 (2013-03-21) | 1,4-6,9, 12,13 | |
| Y | * figures 1-4 * * paragraphs [0006], [0024], [0027], [0029], [0032], [0036], [0038], [0044] - [0048], [0050] * | 1-3, 7-11,14, 15 | |

-/--

The present search report has been drawn up for all claims

| Place of search | Date of completion of the search | Examiner |
|---|---|---|
| The Hague | 6 February 2024 | Santen, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 2674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 835 329 A (MORAN P ET AL) 10 September 1974 (1974-09-10) | 1,4,6,9,12 | |
| Y | * abstract * <br> * figures 1, 2a, 2b, 2c, 3 * <br> * column 2, lines 11-35 * <br> * column 3, lines 7-16, 35-41 and 49-66 * <br> * column 4, lines 57-67 * <br> * column 6, lines 41-62 * <br> * column 7, lines 54-65 * <br> * table 1 * <br> * column 5, line 56 - column 6, line 10 * | 1-3, 7-11,14, 15 | |
| Y | TSAI WEN-CHYI ET AL: "QA measurement of gamma-ray dose and neutron activation using TLD-400 for BNCT beam", APPLIED RADIATION AND ISOTOPES, vol. 137, 1 July 2018 (2018-07-01), pages 73-79, XP093126595, GB ISSN: 0969-8043, DOI: 10.1016/j.apradiso.2018.03.010 <br> * abstract * <br> * section 2. Materials and methods * <br> * section 3.2 * <br> * table 6 * | 1,3,8,9, 11,15 | TECHNICAL FIELDS SEARCHED (IPC) |
| A | CN 108 535 760 A (NATIONAL INSTITUTE FOR RADIOLOGICAL PROT AND NUCLEAR SAFETY CHINESE CE) 14 September 2018 (2018-09-14) <br> * abstract * <br> * paragraphs [0044] - [0061] * | 1-15 | |

The present search report has been drawn up for all claims

| Place of search | Date of completion of the search | Examiner |
|---|---|---|
| The Hague | 6 February 2024 | Santen, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 2674

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| JP 2021038983 | A | 11-03-2021 | JP | 7343736 B2 | 13-09-2023 |
| | | | JP | 2021038983 A | 11-03-2021 |
| US 2013068958 | A1 | 21-03-2013 | EP | 2577352 A1 | 10-04-2013 |
| | | | US | 2013068958 A1 | 21-03-2013 |
| | | | WO | 2011147427 A1 | 01-12-2011 |
| US 3835329 | A | 10-09-1974 | NONE | | |
| CN 108535760 | A | 14-09-2018 | NONE | | |

EPO FORM P0459

For more details about this annex : see Official Journal of the European Patent Office, No. 12/82